# EUROPEAN PATENT SPECIFICATION

(11) **EP 3 819 075 B1**
(45) Date of publication and mention of the grant of the patent: **28.01.2026**
(21) Application number: 19831371.0
(22) Date of filing: 05.07.2019
(51) Int. Cl.: B23B 31/107, B23G 1/46, B23B 31/02, B23B 31/08, B23B 31/20

(54) **MACHINING TOOL**
BEARBEITUNGSWERKZEUG
OUTIL D'USINAGE

(30) Priority: 05.07.2018 JP 2018128243
(43) Date of publication of application: 12.05.2021
(73) Proprietor: Kato Mfg. Co., Ltd., Hiratsuka-shi, Kanagawa, 254-0076 (JP)
(72) Inventor: Nguyen Dinh Dinh, Hiratsuka-shi, Kanagawa 254-0076 (JP)
(74) Representative: Geskes, Christoph
(86) International application number: PCT/JP2019/026917
(87) International publication number: WO 2020/009244

(56) References cited:
- WO-A1-01/28721
- DE-A1- 19 739 466
- JP-A- 2014 210 337
- JP-A- H0 890 313
- JP-A- H10 180 544
- JP-U- S4 837 476
- US-A- 3 521 314
- US-A1- 2016 214 240

## Description

### Technical Field

The present invention relates to a machining tool, and more particularly to a machining tool capable of performing minute expansion and contraction in an axial direction.

### Background Art

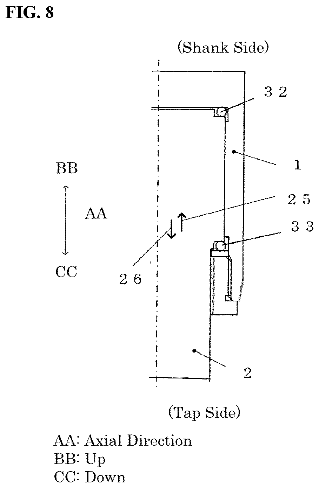

Patent Document 1 (Japanese Unexamined Patent Application Publication No. 2012-11474) shows a machining tool (tapper) that is capable of performing minute expansion and contraction in an axial direction. The structure of this machining tool is shown in FIG. 8. This machining tool consists of an upper body 1 and a holder body 2. The upper part of upper body 1 is configured to be attached to a machine tool spindle, and the lower end of holder body 2 is configured such that a tool (tap) is attached thereto. Because holder body 2 is supported by a first elastic body 32 and a second elastic body 33, both being ring-shaped, holder body 2 is capable of performing minute expansion and contraction of 0.1 to 0.5 mm when a screw hole is drilled in a workpiece with the tool (tap), so that holder body 2 is subjected to a push-back force or a tensile force caused by the tap. Specifically, the first elastic body 32 shrinks by the push-back force 25 of the tap, and the second elastic body 33 shrinks by the tensile force 26 of the tap. However, because the first and second elastic bodies 32 and 33 use oil-resistant rubber O-rings with variable modulus of elasticity, an accurate load calculation cannot be made with this machining tool. The use of rubber rings also makes the machining tool less durable. Moreover, an elastic body made of rubber fails to have the property to perform minute expansion and contraction of 5 to 100 µm.

Patent Document 2 (Japanese Unexamined Patent Application Publication No. 2004-142033) discloses a machining tool that includes a first spring for extension use and a second spring for retraction use. The two springs balance opposite directional forces in an axial direction applied to a movable object to stop the object. In this structure, the amount of expansion-and-contraction of the movable body increases in proportion to the amount of the push-back force and tensile force caused by the springs. In machining tools, the rotation and feed of a tool have been synchronized, which has decreased the need for machining tools to perform large expansion and contraction, and has increased the need for machining tools to perform minute expansion and contraction.

Patent Document 3 discloses a machining tool in accordance with the preamble of claim 1.

### Prior-art Document

### Patent Documents

| | |
|---|---|
| Patent Document 1: | Japanese Unexamined Patent Application Publication No. 2012-11474 |
| Patent Document 2: | Japanese Unexamined Patent Application Publication No. 2004-142033 |
| Patent Document 3: | US 3 521 314 A |

### Summary of the Invention

### Problems to be Solved by the Invention

In order to address the aforesaid problems involving conventional machining tools, one of the objectives of the present invention is to provide a machining tool that is capable of performing accurate and stable minute expansion and contraction.

### Means for Solving Problems

According to an embodiment of the present invention, a machining tool includes an upper body including a joining section that is configured to be attached to a host device, and a cylindrical part at a lower part thereof; a first spring that is provided to the cylindrical part on an outer periphery wall thereof; a holder body including a projection part around which a second spring is wound, a body part, which constitutes a central portion thereof, and a collet chuck configured to grip a tool at a lower end thereof, the holder body being configured to be removably attached to the cylindrical part of the upper body; a clamp cover configured to cover the first spring, and slidably mounted on an outside of the cylindrical part; at least one steel ball that is configured to be held in a through hole of the cylindrical part, one side of the steel ball facing the body part of the holder body, and the other side of the steel ball facing an inner periphery of the clamp cover; a V-shaped groove provided to an outer periphery wall of the body part to support the steel ball; an inclined surface that is provided to an inner periphery of the clamp cover, configured to be inclined towards an axial direction, so as to support the steel ball; and wherein sliding the clamp cover in the axial direction allows the holder body to be attached to and detached from the upper body with one-touch action, wherein the through hole is provided with a first gap (Δc) that permits the steel ball to move in the axial direction, and the clamp cover is provided with a second gap (Δt) on the inside thereof, the second gap (Δt) permitting the steel ball to move in a direction orthogonal to the axial direction, wherein if a push-back force caused by the tool is applied, the steel ball moves across the first gap (Δc) in the axial direction with opposing the biasing force caused by the first spring and the second spring, and wherein if a tensile force caused by the tool is applied, the second spring extends, and the steel ball moves across the second gap (Δt) in the direction orthogonal to the axial direction with opposing the biasing force caused by the first spring.

The clamp cover is preferably provided with a cavity that is configured to accommodate the steel ball moving towards the outside of the cylindrical part.

### Advantageous Effects of the Invention

A machining tool according to the present invention exhibits the following advantageous effects.
1. The machining tool is provided with a first spring, a second spring, and at least one steel ball, which enable the machining tool to perform minute expansion and contraction. The use of the springs does not cause sagging, and reduces the variability in elasticity, unlike a rubber used as an elastic body, which can provide accurate and stable minute expansion and contraction of the machining tool based on the modulus of elasticity.
2. The through hole is provided with a first gap (Δc) that permits the steel ball to move in the axial direction, and the clamp cover is provided with a second gap (Δt) on the inside thereof, the second gap (Δt) permitting the steel ball to move in a direction orthogonal to the axial direction. Because of these features, the machining tool can deal with two forces of a push-back force, and a tensile force caused by a tap.
3. The machining tool is provided with a configuration such that the steel ball is engaged with a V-shaped groove provided to the outer periphery of a body part, and the steel ball can be pushed into a cavity formed on the inner periphery of a clamp, so that the holder body can be easily attached to and detached from the upper body due to the movement of the steel ball.

Because of the configuration in which the clamp cover is provided with the cavity that accommodates the steel ball moving towards the outside from the through hole, the holder body can be detached from the upper body in such a way that the clamp cover is slid to allow the steel ball to be moved from the through hole into the cavity so that the steel ball is disengaged from the V-shaped groove. Conversely, if the removed holder body is attached again to the cylindrical part of the upper body, and the clamp cover is restored to the original position, the steel ball engages with the V-shaped groove, allowing the holder body to be attached to the upper body with one-touch action.

Because the machining tool is configured such that if the push-back force is applied, the steel ball moves across the first gap (Δc) opposing the biasing force caused by the first spring and the second spring, the machining tool can perform minute expansion and contraction in response to a strong load of the push-back force, and a relatively weak load of the tensile force.

### Brief Description of the Drawings

FIG. 1 is an internal structure diagram of a machining tool (Example 1) according to the present invention.
FIG. 2 is an internal structure diagram of a machining tool (Example 2) according to the present invention.
FIG. 3 is an enlarged view of a steel ball 7 and its surrounding area shown FIG. 1.
FIG. 4 is a view to illustrate the operation of the components shown in FIG. 3.
FIG. 5 is another view to illustrate the operation of the components shown in FIG. 3.
FIG. 6 shows another example of a configuration formed by a clamp cover and a first spring.
FIG. 7 is a cross-sectional view taken along line A-A of FIG. 1 showing a circular shape, and illustrates the state where steel balls are mounted.
FIG. 8 is an illustration drawing of a conventional machining tool capable of performing small expansion and contraction.

### Description of the Embodiments

Hereinafter, a machining tool according to the present invention will be described in detail with reference to the accompanying drawings.

### EXAMPLES

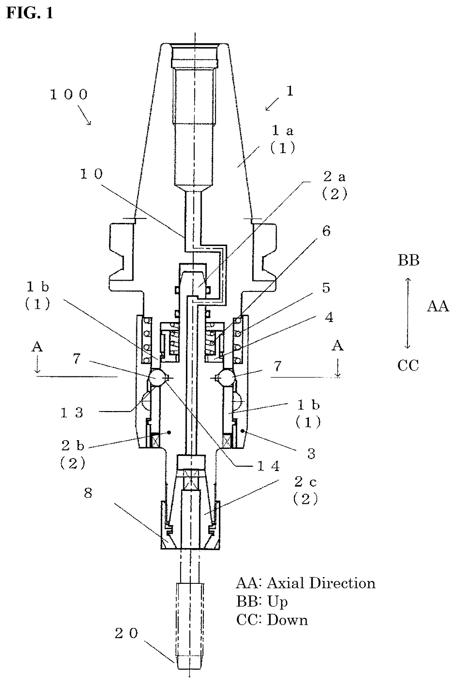

FIG. 1 is an internal structure diagram of a machining tool 100 (Example 1) according to the present invention. Machining tool 100 includes an upper body 1, a holder body 2, a fastening nut 8, and a clamp cover 3. Upper body 1 is configured to be detachably connected to a host device such as a machine tool or a robot. FIG. 1 shows a shank, which is joining section 1a to be connected to a machine tool spindle. Upper body 1 has a cylindrical part 1b at the lower part of joining section 1a. Holder body 2 includes a projection part 2a, the upper part thereof, a body part 2b, the central part thereof, and a collet chuck 2c, the lower end thereof. Holder body 2 is attached to cylindrical part 1b of upper body 1 with projection part 2a being a head portion. In this state where holder body 2 has been attached to cylindrical part 1b, body part 2b of holder body 2 is fitted into cylindrical part 1b of upper body 1. Collet chuck 2c grips a tool 20. In this example, tool 20 is a tap (a tool for drilling threaded holes), although the tool is not limited to this. Fastening nut 8 is configured to be screwed to the lower end of holder body 2 to fasten tool 20 to holder body 2. Clamp cover 3 is slidably mounted on the outside of cylindrical part 1b. Joining section 1a of upper body 1 is provided with a flow channel 10 of a coolant to cool a tool, cannel 10 being formed in a U-shape.

As shown in FIG. 1, upper body 1 is provided with a first spring 5, which is formed so as to wind around the outer periphery of cylindrical part 1b. Holder body 2 is provided with a second spring 6, which is formed so as to wind around the outer periphery of projection part 2a . In order to adjust the biasing force of second spring 6, a push-out fitting 4 is provided to the second spring 6. In this example, projection part 2a, which is configured to be rod-shaped, and body part 2b, which constitutes the central part of holder body 2, are formed in one piece. Machining tool 100 includes steel balls 7, which are held in through holes 13, through holes 13 being provided to cylindrical part 1b. Each steel ball 7 protrudes from each through hole 13, one side of each steel ball 7 facing body part 2b of holder body 2, and the other side of each steel ball 7 facing the inner periphery of clamp cover 3. Body part 2b of holder body 2 is provided with V-shaped grooves 14 on the outer periphery of body part 2b. Each of grooves 14 is configured to support each steel ball 7. Clamp cover 3 is provided with inclined surfaces 15 on the inner periphery thereof. Each of the inclined surfaces 15 is configured to support each steel ball 7.

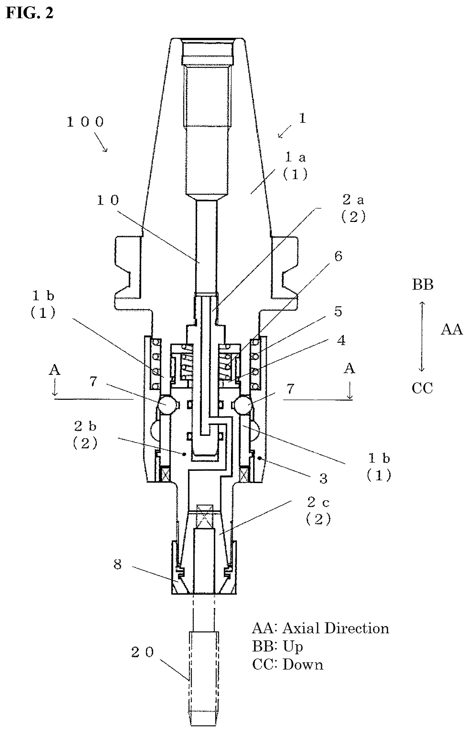

FIG. 2 is an internal structure diagram of a machining tool 100 (Example 2) according to another embodiment of the present invention. Machining tool 100 of Example 2 differs from machining tool 100 of Example 1 shown in FIG. 1 only in the configuration of the upper part of a holder body 2. In the example shown in FIG. 2, a projection part 2a configured to be rod-shaped is separately formed from a body part 2b, which is the central part of holder body 2, so that projection part 2a and body part 2b are not formed in one piece. The upper part of projection part 2a is fitted into a joining section 1a of an upper body 1, and the lower part of projection part 2a is fitted into a recessed part of body part 2b. Projection part 2a is axially provided with a flow channel 10 of a coolant in the center thereof, and U-shaped flow channel 10 is provided to body part 2b. The configuration of the other components in this example is the same as that of the example shown in FIG. 1.

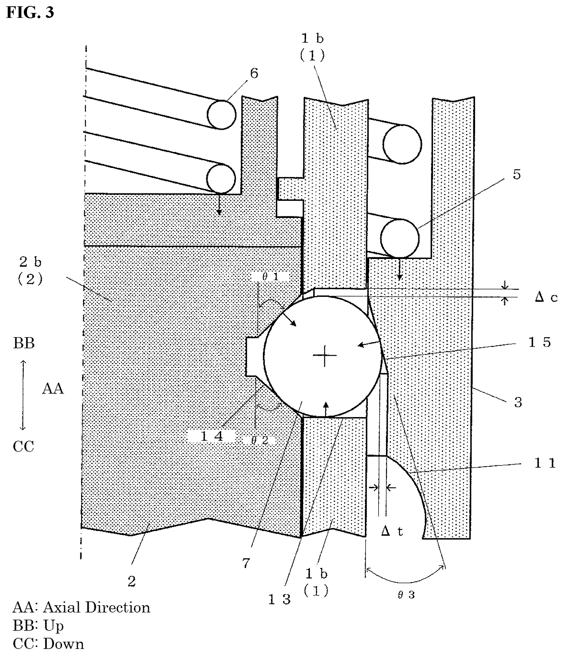

FIG. 3 is an enlarged view of a steel ball 7 and its surrounding area shown FIG. 1. As shown in FIG. 3, in the state where holder body 2 has been fitted into upper body 1, both first spring 5 and second spring 6 are configured to downwardly bias clamp cover 3 and body part 2b respectively in an axial direction. One side of each V-shaped groove 14 has an angle of θ1 with respect to the axial direction, and the other side of each V-shaped groove 14 has an angle of θ2 with respect to the axial direction. The angles of θ1 and θ2 may be configured to be the same or different. Inclined surface 15 has an angle of θ3 with respect to the axial direction. Because first spring 5 and second spring 6 bias clamp cover 3 and body part 2b respectively in an axial direction towards tool 20, steel ball 7 is pushed downward towards tool 20 by way of inclined surface 15 having the angle θ3 and the side of groove 14 having the angle θ1, whereby steel ball 7 is held on the lower end surface of through hole 13. Cylindrical part 1b of upper body 1 is a fixed part, and body part 2b of holder body 2, which is a movable part, is held by steel balls 7. Also, the weight of holder body 2 is applied to each of steel balls 7 at the point where one side of groove 14 forming the angle θ1 contacts with steel ball 7, and the weight of clamp cover 3 is applied to each of steel balls 7 at the point where inclined surface 15 contacts with steel ball 7. In this state, there is a first gap Δc between steel ball 7 and the upper end surface of through hole 13. Also, there is a second gap Δt between the point where steel ball 7 contacts with inclined surface 15 and the end point of inclined surface 15.

As shown in FIG. 3, clamp cover 3 is provided with a cavity 11 that is formed into a hemispherical shape. Sliding the clamp cover upward to oppose the biasing force caused by first spring 5 allows steel ball 7 to be fitted into cavity 11. If steel ball 7 moves towards the outside of cylindrical part 1b, steel ball 7 is disengaged from V-shaped groove 14 of holder body 2. In this state, holder body 2 can be removed from upper body 1 by pulling down holder body 2. Conversely, if removed holder body 2 is attached again to cylindrical part 1b of upper body 1, and clamp cover 3 is restored to the original position by the force of first spring 5, steel ball 7 engages with V-shaped groove 14, so that holder body 2 is locked onto upper body 1, allowing holder body 2 to be attached to upper body 1 with one-touch action.

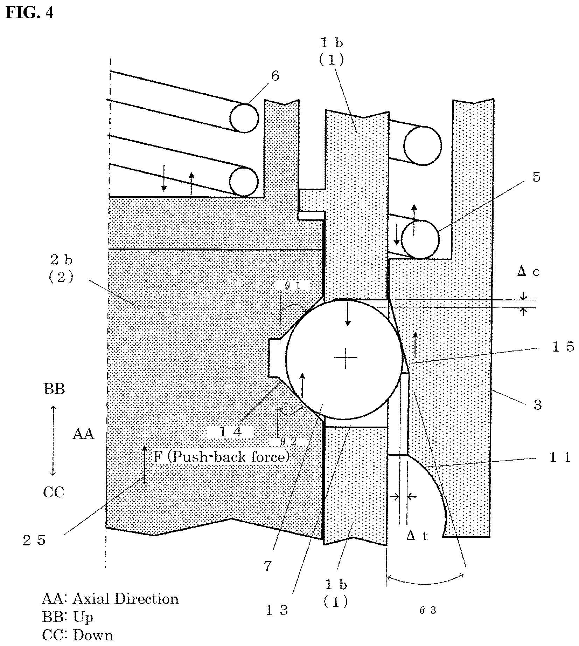

FIG. 4 is a view to illustrate the operation of the components shown in FIG. 3. This view shows how the components operate when push-back force 25 caused by tool 20 is applied upwardly to holder body 2. Steel ball 7 is pushed at the point where the side of groove 14, which forms angle θ2, contacts with steel ball 7, and moves upwardly by first gap Δc to contact with the upper end surface of through hole 13. Second spring 6 shrinks as holder body 2 is pushed upward. First spring 5 also shrinks as clamp cover 3 is pushed upwardly at the point where steel ball 7 contacts with inclined surface 15. Push-back force 25 results in the shrinking of both first spring 5 and second spring 6. Steel ball 7 moves upwardly in the axial direction, and does not move in the direction orthogonal to the axial direction.

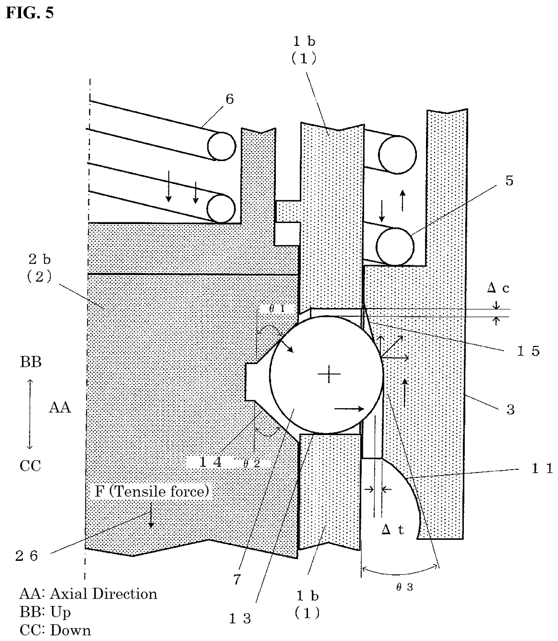

FIG. 5 is another view to illustrate the operation of the components shown in FIG. 3. This view shows the operation of the components when tensile force 26 caused by tool 20 is applied downwardly to holder body 2. Steel ball 7 is pushed downward at the point where the side of groove 14, which forms the angle θ1, contacts with steel ball 7, but the lower end surface of through hole 13 prevents steel ball 7 from being moved in the axial direction. Therefore, steel ball 7 moves in the direction orthogonal to the axial direction by second gap Δt. At the same time, steel ball 7 pushes inclined surface 15 upwardly in the axial direction, by which first spring 5 shrinks, and second spring 6 extends downward. Thus, the tensile force causes first spring 5 to shrink and second spring 6 to extend. Steel ball 7 moves in the direction orthogonal to the axial direction, and does not move downwardly in the axial direction.

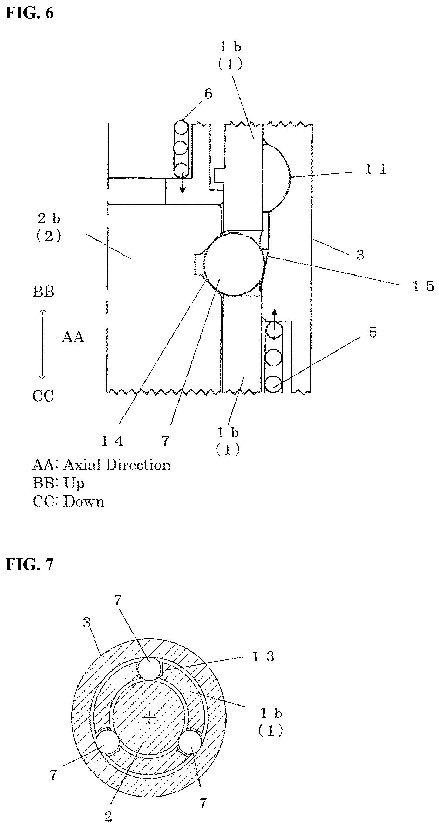

FIG. 6 shows another example of a configuration formed by a clamp cover and a first spring. In the example shown in FIG. 3, in the state where holder body 2 has been fitted into upper body 1, first spring 5 is configured to bias clamp cover 3 downwardly in the axial direction. However, as shown in FIG. 6, first spring 5 is configured to bias a clamp cover 3 upwardly in the axial direction. In such a case, hemispherical cavity 11 of clamp cover 3 is provided to the upper part of clamp cover 3. The description of the movement of steel ball 7 is omitted because this is the same as that described with reference to FIGS. 4 and 5.

FIG. 7 is a cross-sectional view taken along line A-A of FIG. 1 showing a circular shape, and illustrates the state where steel balls are mounted. Cylindrical part 1b, body part 2b, and clamp cover 3 are respectively configured to be in a circular shape. If a steel ball 7 rests in through hole 13, steel ball 7 will not exit from the inside of cylinder 1b because the walls of through hole 13 are configured to be tapered. Also, even if machining tool 100 bites into a workpiece to result in twisting of holder body 2, the positional relationships between cylindrical part 1b of upper body 1, holder body 2, and steel balls 7 are not changed.

### Industrial Applicability

The present invention has various applications as a machining tool capable of performing minute expansion and contraction in an axial direction.

### Description of Reference Signs

- 1: upper body
- 1a: joining section
- 1b: cylindrical part
- 2: holder body
- 2a: projection part
- 2b: body part 2b
- 2c: collet chuck
- 3: clamp cover
- 4: push-out fitting
- 5: first spring
- 6: second spring
- 7: steel ball
- 8: fastening nut
- 10: flow channel
- 11: hemispherical cavity
- 13: through hole
- 14: groove
- 15: inclined surface
- 20: tool (tap)
- 25: push-back force
- 26: tensile force
- Δc: first gap
- Δt: second gap
- 32: first elastic body
- 33: second elastic body
- 100: machining tool

## Claims

1. A machining tool comprising:
an upper body (1) comprising a joining section (1a) that is configured to be attached to a host device, and a cylindrical part (1b) at a lower part thereof;
a first spring (5) that is provided to the cylindrical part (1b) on an outer periphery wall thereof;
a holder body (2) comprising a projection part (2a) around which a second spring (6)is wound, a body part (2b), which constitutes a central portion thereof, the holder body (2) being configured to be removably attached to the cylindrical part (1b) of the upper body (1);
at least one steel ball (7) that is configured to be held in a through hole (13) of the cylindrical part (1b), one side of the steel ball (7) facing the body part (2b) of the holder body (2), and the other side of the steel ball (7) facing an inner periphery of a clamp cover (3);
an inclined surface (15) that is provided to an inner periphery of the clamp cover (3), configured to be inclined towards an axial direction, so as to support the steel ball (7);
**characterized in that** the machining tool further comprises:
a collet chuck (2c) configured to grip a tool at a lower end of the holder body (2),
a V-shaped groove (14) provided to an outer periphery wall of the body part (2b) to support the steel ball (7);
wherein the clamp cover (3) is configured to cover the first spring (5) and is slidably mounted on an outside of the cylindrical part (1b);
wherein sliding the clamp cover (3) in the axial direction allows the holder body (2) to be attached to and detached from the upper body (1) with one-touch action,
wherein the through hole (13) is provided with a first gap (Δc) that permits the steel ball (7) to move in the axial direction, and the clamp cover (3) is provided with a second gap (Δt) on the inside thereof, the second gap (Δt) permitting the steel ball (7) to move in a direction orthogonal to the axial direction,
wherein if a push-back force caused by the tool is applied, the steel ball (7) moves across the first gap (Δc) in the axial direction with opposition to the biasing force caused by the first spring (5) and the second spring (6), and
wherein if a tensile force caused by the tool is applied, the second spring (6) extends, and the steel ball (7) moves across the second gap (Δt) in the direction orthogonal to the axial direction with opposition to the biasing force caused by the first spring (5).

2. The machining tool of Claim 1, wherein the clamp cover (3) is provided with a cavity (11) that is configured to accommodate the steel ball (7) moving towards the outside of the cylindrical part (1b).

## Patentansprüche

1. Ein Bearbeitungswerkzeug, umfassend:
einen oberen Körper (1), umfassend einen Verbindungsabschnitt (1a), der derart konfiguriert ist, dass er an einer Trägervorrichtung angebracht werden kann, sowie einen zylindrischen Teil (1b) an dessen unterem Teil;
eine erste Feder (5), die an der Außenwand des zylindrischen Teils (1b) angeordnet ist,
einen Haltekörper (2), umfassend ein Projektionsteil (2a), um den eine zweite Feder (6) gewickelt ist, und ein Körperteil (2b), das einen mittleren Abschnitt desselben bildet, wobei der Haltekörper (2) derart konfiguriert ist, dass er abnehmbar an dem zylindrischen Teil (1b) des oberen Körpers (1) befestigt werden kann;
mindestens eine Stahlkugel (7), die derart ausgebildet ist, dass sie in einem Durchgangsloch (13) des zylindrischen Teils (1b) gehalten wird, wobei eine Seite der Stahlkugel (7) dem Körperteil (2b) des Haltekörpers (2) zugewandt ist und die andere Seite der Stahlkugel (7) einer inneren Peripherie einer Klemmabdeckung (3) zugewandt ist;
eine geneigte Fläche (15), die an einer inneren Peripherie der Klemmabdeckung (3) angeordnet ist und derart ausgebildet ist, dass sie in Richtung einer axialen Richtung geneigt ist, um die Stahlkugel (7) zu stützen; **dadurch gekennzeichnet, dass** das Bearbeitungswerkzeug weiterhin umfasst:
ein Zangenspannfutter (2c), das derart konfiguriert ist, dass es ein Werkzeug am unteren Ende des Haltekörpers (2) greift,
eine V-förmige Nut (14), die an einer äußeren peripheren Wand des Körperteils (2b) angeordnet ist, um die Stahlkugel (7) zu stützen;
wobei die Klemmabdeckung (3) derart konfiguriert ist, dass sie die erste Feder (5) abdeckt und verschiebbar an einer Außenseite des zylindrischen Teils (1b) montiert ist;
wobei das Verschieben der Klemmabdeckung (3) in die axiale Richtung es ermöglicht, den Haltekörper (2) mit einer einzigen Bewegung am oberen Körper (1) anzubringen und von diesem zu lösen,
wobei das Durchgangsloch (13) mit einem erster Spalt (Δc) versehen ist, der es der Stahlkugel (7) ermöglicht, sich in die axiale Richtung zu bewegen, und die Innenseite der Klemmabdeckung (3) mit einem zweiten Spalt (Δt) versehen ist, der es der Stahlkugel (7) ermöglicht, sich in einer zur axialen Richtung orthogonalen Richtung zu bewegen,
wobei, wenn eine durch das Werkzeug verursachte Rückstoßkraft ausgeübt wird, sich die Stahlkugel (7) entgegen der durch die erste Feder (5) und die zweite Feder (6) verursachten Vorspannkraft in axialer Richtung über den ersten Spalt (Δc) bewegt,
und
wobei, wenn eine durch das Werkzeug verursachte Zugkraft ausgeübt wird, sich die zweite Feder (6) ausdehnt und sich die Stahlkugel (7) entgegen der durch die erste Feder (5) verursachten Vorspannkraft über den zweiten Spalt (Δt) in einer zur axialen Richtung orthogonalen Richtung bewegt.

2. Das Bearbeitungswerkzeug gemäß Anspruch 1, wobei an der Klemmabdeckung (3) ein Hohlraum (11) angeordnet ist, der derart konfiguriert ist, dass er die sich zur Außenseite des zylindrischen Teils (1b) bewegende Stahlkugel (7) aufnehmen kann.

## Revendications

1. Outil d'usinage comprenant :
un corps supérieur (1) comprenant une section de jonction (1a) qui est configurée pour être attachée à un dispositif hôte, et une partie cylindrique (1b) au niveau d'une partie inférieure de celui-ci ;
un premier ressort (5) qui est ménagé sur la partie cylindrique (1b) sur une paroi périphérique externe de celle-ci ;
un corps support (2) comprenant une partie projection (2a) autour de laquelle est enroulé un second ressort (6), une partie corps (2b), qui constitue une portion centrale de celui-ci, le corps support (2) étant configuré pour être attaché de manière amovible à la partie cylindrique (1b) du corps supérieur (1) ;
au moins une bille en acier (7) qui est configurée pour être maintenue dans un trou traversant (13) de la partie cylindrique (1b), un côté de la bille en acier (7) faisant face à la partie corps (2b) du corps support (2), et l'autre côté de la bille en acier (7) faisant face à une périphérie interne d'un couvercle de serrage (3) ;
une surface inclinée (15) qui est ménagée sur une périphérie interne du couvercle de serrage (3), configurée pour être inclinée vers une direction axiale, de manière à supporter la bille en acier (7) ;
**caractérisé en ce que** l'outil d'usinage comprend en outre :
un mandrin de serrage (2c) configuré pour saisir un outil au niveau d'une extrémité inférieure du corps support (2),
une rainure en forme de V (14) ménagée sur une paroi périphérique externe de la partie corps (2b) afin de supporter la bille en acier (7) ;
dans lequel le couvercle de serrage (3) est configuré pour couvrir le premier ressort (5) et est monté de manière coulissante sur un extérieur de la partie cylindrique (1b) ;
dans lequel le coulissement du couvercle de serrage (3) dans la direction axiale permet au corps support (2) d'être attaché au corps supérieur (1) et d'en être détaché par simple contact,
dans lequel le trou traversant (13) est pourvu d'un premier dégagement (Δc) qui permet à la bille en acier (7) de se déplacer dans la direction axiale, et le couvercle de serrage (3) est pourvu d'un second dégagement (Δt) sur l'intérieur de celui-ci, le second dégagement (Δt) permettant à la bille en acier (7) de se déplacer dans une direction orthogonale à la direction axiale,
dans lequel, si une force de refoulement provoquée par l'outil est appliquée, la bille en acier (7) se déplace à travers le premier dégagement (Δc) dans la direction axiale en opposition à la force de sollicitation provoquée par le premier ressort (5) et le second ressort (6), et
dans lequel, si une force de traction provoquée par l'outil est appliquée, le second ressort (6) s'étend, et la bille en acier (7) se déplace à travers le second dégagement (Δt) dans la direction orthogonale à la direction axiale en opposition à la force de sollicitation provoquée par le premier ressort (5).

2. Outil d'usinage selon la revendication 1, dans lequel le couvercle de serrage (3) est pourvu d'une cavité (11) qui est configurée pour recevoir la bille en acier (7) se déplaçant vers l'extérieur de la partie cylindrique (1b).
